# EUROPEAN PATENT APPLICATION

(11) **EP 1 882 613 A1**
(43) Date of publication of application: **30.01.2008**
(21) Application number: 05738574.2
(22) Date of filing: 11.05.2005
(51) Int. Cl.: B60R 16/02, B60K 35/00, B60R 1/00, H04Q 9/00

(54) **VEHICLE AND IN-VEHICLE COMMUNICATION CONTROL DEVICE**

(71) Applicant: HITACHI, LTD., Chiyoda-ku Tokyo 100-8280 (JP)
(72) Inventor: ARITA, Setsuo c/o Hitachi Ltd. IP Group, 12th floor, Chiyoda-ku, Tokyo 100-8220 (JP); ICHINOSE, Yuji c/o Hitachi Ltd. IP Group, 12th floor, Chiyoda-ku, Tokyo 100-8220 (JP); ISHII, Yoshikazu c/o Hitachi Ltd. IP Group, 12th floor, Chiyoda-ku, Tokyo 100-8220 (JP); SAITO, Nao c/o Hitachi Ltd. IP Group, 12th floor, Chiyoda-ku, Tokyo 100-8220 (JP); SHINMA, Daisuke c/o Hitachi Ltd. IP Group, 12th floor, Chiyoda-ku, Tokyo 100-8220 (JP); YOSHIDA, Tatsuya c/o Hitachi Ltd. IP Group, 12th floor, Chiyoda-ku, Tokyo 100-8220 (JP)
(74) Representative: Beetz & Partner
(86) International application number: PCT/JP2005/009010
(87) International publication number: WO 2006/120757

(57) **Abstract**

It is possible to provide a vehicle and an in-vehicle communication control device capable of performing control with preferable response even under an environment where notch attenuation exists and various noises are superimposed in a cable communication using a battery line. The vehicle includes: a plurality of operation devices installed in the vehicle; sensors arranged in the respective operation devices for detecting operation amounts of the operation devices; a controller inputting the operation amounts detected by the sensors; a communication device connected to the controller and a battery line and outputting a control signal as a carrier of a different frequency band for each type of the operation devices to the battery line; a second communication device connected to the battery line and using a carrier of a frequency band of each of the operation devices as a pass band; and a second controller connected to the second communication device and controlling the control device corresponding to the operation device.

## Description

### TECHNICAL FIELD

The present invention relates to a vehicle and an in-vehicle communication control device

### BACKGROUND OF THE INVENTION

Recently, a device using an inverter is widely used in a vehicle. Switching operation of an inverter as a device for controlling a large current causes a large noise. The noise and an electromagnetic wave are superimposed on a communication cable signal, which lowers the communication performance. Moreover, when a communication cable has a branched portion or has an open end, reflection by impedance mismatch may cause a sudden signal attenuation which is called a notch attenuation in a particular frequency. Furthermore, if the communication cable is long, the signal attenuation is caused in accordance with the length. The attenuation ratio is higher as the frequency of the carrier is higher. The noise and the signal attenuation are large factors to lower the communication line communication performance. Since in a vehicle, a radio and television radio wave are received, it is necessary to prevent the noise and the electromagnetic wave from behaving as noise sources in the radio and the television communication frequency band.

On the other hand, in order to control a vehicle, a multi-channel communication can be considered instead of time-division communication having an insufficient control response. For this, a plurality of communication lines should be arranged, which causes a problem that the weight of the communication line increases the weight of the vehicle.

For simplifying the wiring configuration, JP-A-11-266251 discloses an in-vehicle wiring device including a control unit arranged in a predetermined position in a vehicle for controlling the entire vehicle and a main cable for transmitting a control system signal to an electric component control unit. The main cable is formed by a leak cable causing an electromagnetic field in accordance with the control system signal. More than one electric component control units are arranged in the vicinity apart from the main cable. A transmission/reception antenna is provided for performing radio communication with the main cable via the electromagnetic field.

Moreover, JP-A-9-55986 discloses an in-vehicle communication system including an acquisition controller and a plurality of reception controllers, each arranged for various controllers successively connected by a predetermined transmission medium for controlling the in-vehicle system. The acquisition controller acquires common information to be used commonly and outputs the common information to the transmission medium so as to be transmitted to the respective reception controllers. The reception controllers perform input processes for performing input to the various controllers corresponding to the received common information, on the transmission medium, and outputs the received common information to the transmission medium so as to transmit it to other reception controller if necessary.

Moreover, JP-A-2003-116187 discloses an in-vehicle LAN system including: a main control device having control signal generating means for outputting a control signal containing an ID for controlling on-vehicle electric devices to a power line for supplying power to the electric devices; and an electric device control unit for detecting a control signal containing an ID from the power line and controlling the electric devices. JP-A-2003-318925 discloses an on-vehicle communication system including a plurality of electric devices connected to a first communication line which also supplies power to electric devices, wherein some of the electric devices are also connected as special electric devices to a second communication line. Between the special electric devices, communication is performed by both of the first communication line and the second communication line.

JP-A-11-266251 discloses an in-vehicle wiring device using a main cable formed by a leak cable. For this, the network currently used in a vehicle should be replaced by the leak cable and the wiring device cannot be applied to a current vehicle. Moreover, when using the current network, a new leak cable should be installed. This increases the weight of the vehicle body. Moreover, in the vehicle, radio and television signals are received. No consideration is taken on that these are noise sources.

Moreover, JP-A-9-55986 discloses an in-vehicle communication system which requires installation of a dedicated communication cable instead of the network currently used in an vehicle and has a problem that the system cannot be applied to the current vehicle. Moreover, when using the current network, a new cable should be installed and the weight of the vehicle body is increased.

Moreover, an in-vehicle LAN system disclosed in JP-A-2003-116187 and an in-vehicle communication system disclosed in JP-A-2003-318925 use a power line carrier but take no consideration neither on preventing signal mixing with the radio and the television used in the vehicle nor on preventing signal attenuation.

It is therefore an object of the present invention to provide a vehicle and an in-vehicle communication control device capable of performing control with preferable response in a cable communication using a battery line even under an environment where notch attenuation exists and various noises are superimposed.

Another object of the present invention is to provide a vehicle and an in-vehicle communication control device capable of reducing the weight of the communication line, which can be appropriately used for performing communication in an information processing system.

### DISCLOSURE OF THE INVENTION

According to the present invention, it is possible to control a plurality of devices by using a battery line already installed in a vehicle without requiring installation of a new communication line. Accordingly, it is possible to reduce the cost for the entire communication system.

### BRIEF DESCRIPTION OF THE DRAWINGS

Fig. 1 is a block diagram showing a configuration of a vehicle according to an embodiment of the present invention;
Fig. 2 is a block diagram showing a configuration of a communication device according to the present embodiment;
Fig. 3 shows an example of actual measurement of a noise during operation of an engine in a vehicle;
Fig. 4 shows an example of actual measurement of a noise during operation of an air conditioner in a vehicle;
Fig. 5 shows an example of actual measurement of a noise superimposed on a communication line when a battery line in the vehicle is used as the communication line;
Fig. 6 shows the relationship between the S/N ratio and the bit error rate;
Fig. 7 is a flowchart of a training process of the present embodiment;
Fig. 8 shows a format for transferring a packet according to the present embodiment; and
Fig. 9 is a flowchart of the training process started by an event of the present embodiment.

### BEST MODE FOR CARRYING OUT THE INVENTION

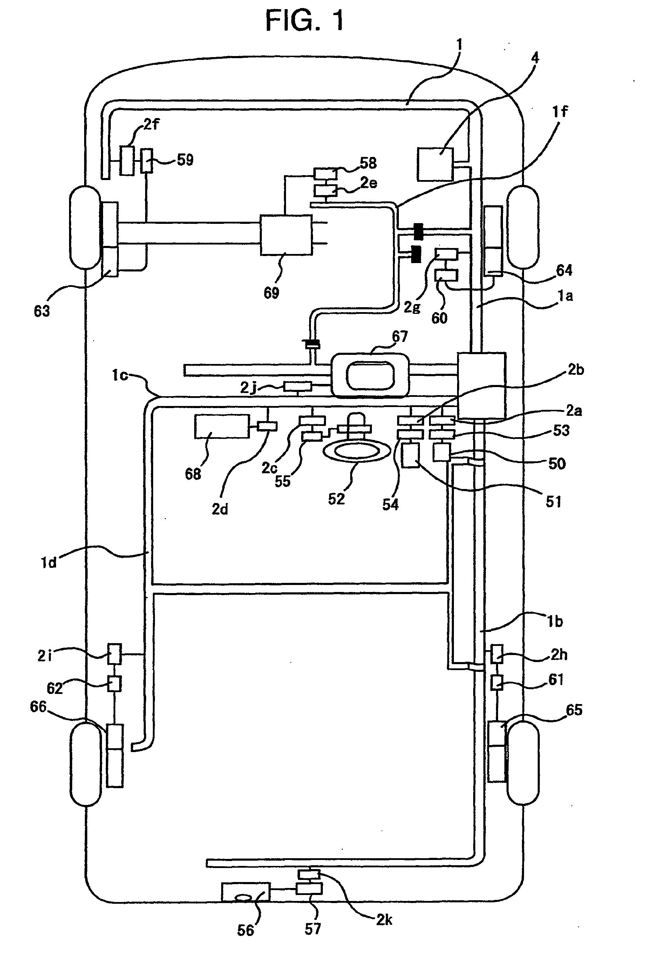

Description will now be directed to an embodiment of the present invention with reference to Fig. 1 to Fig. 9. Fig. 1 is a block diagram showing a configuration of an in-vehicle communication control device.

As shown in Fig. 1, a vehicle includes a battery 4 and a battery line 1 for connecting and supplying power to connection/disconnection control parts such as a switch and a relay arranged at various components of the vehicle, load devices such as a lamp, a motor, and an electronic device, signal parts such as various sensors, and a load control unit for controlling the load devices. The battery line 1 is mainly is configured by a front harness 1a arranged at the front of the vehicle body, a rear harness 1b arranged at the rear of the vehicle body, an instrument harness 1c arranged along an instrument panel, a floor harness 1d arranged on a floor of the vehicle, and an engine room harness 1f arranged in an engine room.

At the driver's seat of the vehicle, a throttle pedal 50, a brake pedal 51, and a steering wheel 52 are provided as operation devices of the control system. A step-in amount as the operation amount of the throttle pedal 50 as the operation device is detected by an accelerator position sensor as a detection sensor of the operation amount and inputted to a controller 53. The controller 53 is connected via the communication device 2a to the instrument harness 1c. The step-in amount of the brake pedal 51 is detected by a sensor (not depicted) and inputted to a controller 54. The controller 54 is connected to the instrument harness 1c via the communication device 2b. The steering wheel 52 includes a steering angle sensor (not depicted) and the operation amount of the steering wheel detected by the steering angle sensor is inputted to a controller 55. The controller 55 is connected to the instrument harness 1c via the communication device 2c.

In the rear portion of the vehicle body, a back view monitor camera 56 formed by a CCD camera as an imaging device of an information system is installed for capturing an image of the rear of the vehicle. The image captured by the back view monitor camera 56 is inputted to a controller 57. The controller 57 is connected to the rear harness 1b via a communication device 2k. The instrument harness 1c is connected to a communication device 2j and the communication device 2j is connected to a car navigation device 67.

Output of the accelerator position sensor is connected to an ECU 68 as an engine control unit by a network arranged separately. Moreover, the instrument harness 1c is connected to a communication device 2d. The control signal from the communication device 2a and the detection value of the accelerator position sensor are inputted to the ECU 68 via the communication device 2d.

The engine room harness 1f in the engine room is connected to a controller 58 via a communication device 2e. A signal of a speed sensor is fed back to the controller 58 and the steering device 69 is controlled in accordance with the vehicle speed. The controller 58 is connected to the steering sensor via the network arranged separately and has a fail safe function.

The front wheel section of the front harness 1a is connected to a communication device 2f and 2g. The communication device 2f is connected to a controller 59 and the communication device 2g is connected to a controller 60. The rear wheel section of the rear harness 1b is connected to a communication device 2h. The communication device 2h is connected to a controller 61. The rear wheel section of the floor harness 1d is connected to a communication device 2i. The communication device 2i is connected to a controller 62. The controllers 59, 60, 61, and 62 are connected to electric brakes 63, 64, 65, and 66, respectively. It is also possible to use hydraulic brakes instead of the electric brakes. The electric brakes and the hydraulic brakes will be referred to as brake devices.

Thus, it is possible to perform brake control by using a battery line having a large line diameter. Accordingly, the communication line is hardly cut off and the reliability is improved. It should be noted that the controllers 59, 60, 61, and 62 may be omitted.

The operation of the throttle pedal 50 is detected by the accelerator position sensor and inputted to the ECU 68 so as to control the engine. The operation of the brake pedal 51 is detected by a sensor and inputted to the controller 54, where it is converted into a control signal and inputted to the communication device 2b. The control signal is communicated from the communication device 2b to the communication devices 2f, 2g, 2h, and 2i arranged at the front wheel section or the rear wheel section by using the battery line 1 as a power line carrier and inputted to the controllers 59, 60, 61, and 62 to control the electric brakes 63, 64, 65, and 66.

The operation of the steering wheel 52 is detected by the steering angle sensor and inputted to the controller 55. The operation is converted into a control signal by the controller 55 and inputted to the communication device 2c. The control signal is communicated from the communication device 2c to the communication device 2e in the engine room by using the battery line 1 as a power line carrier and inputted to the controller 58 to control the steering device 69.

Considering a state when operations of the throttle pedal 50, the brake pedal 51, and the steering wheel 52 cannot be communicated via the battery line 1, the controllers 53, 54, and 55 are connected to the ECU 68 and the steering device 69 by using a communication line different from the battery line 1. Moreover, if necessary, it is possible to make connections with the electric brakes 63, 64, 65, and 66 by a separate communication line.

An image captured by the back view monitor camera 56 is inputted to the controller 57, subjected to image processing, and inputted to the communication device 2k. The image is communicated from the communication device 2k to the communication device 2j by using the battery line 1 as a power line carrier, inputted to the navigation device 67, and displayed on a display screen of the navigation device 67. Here, the image is displayed on the navigation device but it may be displayed on any display device installed in the vehicle.

Thus, the back view monitor camera 56 is communicated by the battery line via the controller 57 and the communication device 2k. Accordingly, there is no need of installing a special communication cable at the rear of the vehicle. Thus, it is possible to simplify the mounting procedure and reduce the weight of the communication cable.

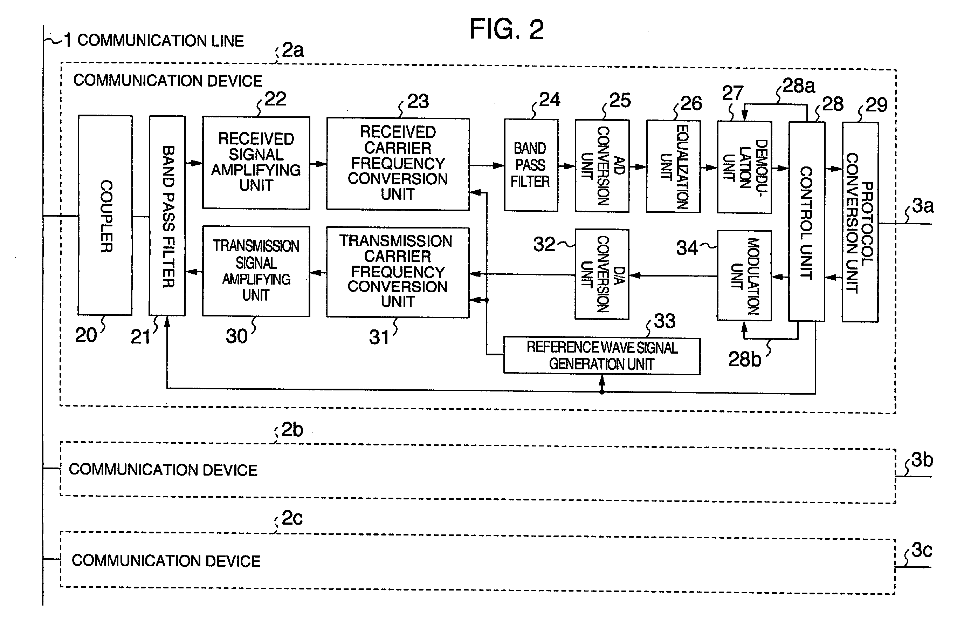

Fig. 2 is a block diagram showing a configuration of the communication device. The communication devices 2a, 2b, 2c, ..., connected to the battery line 1 perform data communication between those having the matched frequency band passing through the band pass filter. The communication devices 2a, 2b, 2c, ..., have I/O lines 3a, 3b, 3c, ..., respectively for performing input/output of various signals to/from the control devices.

Since the communication devices 2a, 2b, 2c, ... have an identical configuration, explanation will be given on the communication device 2a as an example.

The communication device 2a is formed by a coupler 20 connecting the communication device 2a to the battery line 1, a band pass filter 21 for passing a set frequency and connected in the coupler 20, a reception signal amplifier 22 for amplifying a reception signal received via the band pass filter 21, a reception carrier frequency conversion unit 23 for converting the reception signal amplified by the reception signal amplification unit 22 back to the carrier signal of the base band by the signal from a reference wave signal generation unit 33, a band pass filter 24 connected to the reception carrier frequency conversion unit 23 for removing a secondary wave such as a beat signal and the like, an A/D (analog/digital) converter 25 for converting an output signal of the band pass filter 24 from analog to digital, an equalization unit 26 connected to the A/D converter 25 and correcting the communication path distortion, a demodulation unit 27 connected to the equalization unit 26 and demodulating the modulated base band carrier, a control unit 28 connected to the demodulation unit 27 and extracting data, a protocol conversion unit 29 connected to the control unit 28 and performing data protocol conversion, a modulation unit 34 connected to the control unit 28 and modulating a transmission signal, a D/A (digital/analog) converter 32 connected to the modulation unit 34 and converting the modulated digital data into an analog signal, a transmission carrier frequency conversion unit 31 for transforming the analog signal converted by the D/A converter 32 to a carrier signal of the frequency band which is set by the signal from the reference wave signal generation unit 33, and a transmission signal amplification unit 30 for amplifying the analog signal generated by the transmission carrier frequency conversion unit 31.

The protocol conversion unit 29 has a role to form an interface with a control device such as a throttle control device, an electric brake, or an EMB (electric mechanical brake), and a steering device 69 or an information device such as the back view monitor camera 56. The control device or the information processing device is based on a microcomputer and uses a protocol such as USB (Universal Serial Bus) and TCP/IP (Transmission Control Protocol/Internet Protocol) for communication in the I/O line 3 connecting the communication device 2 to the control device or the information processing device. When information is inputted from a control device or an information processing device, the protocol conversion unit 29 converts the information into a communication packet of the data format used in the communication device 2. Upon reception of the communication packet from the protocol conversion unit 29, the control unit 28 outputs the packet data to the modulation unit 34.

The modulation unit 34 modulates the packet data according to the set modulation method and generates a carrier signal of the base band. In this embodiment, the multi-carrier modulation method is used as the modulation method. In the case of the multi-carrier modulation method, information on a data allocation amount 28b deciding the level is separately inputted from the control unit 27 for each carrier and the packet data is modulated according to the data allocation amount 28b so as to generate the carrier signal of the base band.

The base band carrier signal is converted into an analog signal by the D/A conversion unit 32, converted into a frequency for communication via the battery line 1 by the transmission carrier frequency conversion unit 31, amplified by the transmission signal amplification unit 30, and outputted as a carrier signal via the band pass filter 21 to the battery line 1.

Here, the transmission carrier frequency conversion unit 31 is formed by a so-called mixer circuit and has a function to shift the frequency of the carrier signal after the D/A conversion by the frequency of the signal outputted from the reference wave signal generation unit 33. Moreover, the reference wave signal generation unit 33 can output reference waves of a plurality of frequencies. A band selection signal 28c outputted from the control unit 28 selects which frequency of the reference signal is to be outputted.

The carrier signal outputted to the battery line 1 as the communication path is received by a communication device having a band pass filter 21 for passing the same frequency band among the communication devices 2b, 2c, ....

On the other hand, the carrier signal transmitted via the battery line 1 from the communication devices 2b, 2c ... are taken into the communication device by the coupler 20 and inputted into the reception amplification unit 22 by excluding signal components other than the communication band set by the band pass filter 21. The reception signal amplification unit 22 amplifies the carrier signal which has passed through the band pass filter 21 and outputs the amplified signal to the reception carrier frequency conversion unit 23.

The reception carrier frequency conversion unit 23 is formed by a so-called mixer circuit and has a function to shift the frequency of the signal outputted from the reception signal amplification unit 22 by the frequency of the signal outputted from the reference wave signal generation unit 33. That is, the reception carrier frequency conversion unit 23 has a function to reset the received carrier signal to the carrier signal of the base band upon demodulation. Here, the reference wave signal generation unit 33 can output reference waves of a plurality of frequencies. The band selection signal 28c outputted from the control unit 28 selects which frequency of the reference wave is to be outputted.

The band pass filter 24 passes the carrier signal of the set frequency band so as to exclude a secondary wave such as a beat signal generated when the reception carrier frequency conversion unit 23 performs frequency conversion of the reception carrier. The A/D conversion unit 25 converts the carrier signal which has passed through the band pass filter 24 from analog to digital and inputs the converted digital signal to the equalization unit 26.

The equalization unit 26 is used to correct a communication path distortion (also called a transmission path distortion) of the battery line 1 and corrects a communication path distortion. The base band carrier signal corrected by the equalization unit 26 is outputted to the demodulation unit 27. The equalization unit 26 is required to correct the communication path distortion of the battery line 1 so that the demodulation unit 27 can correctly demodulate data. The equalization unit 26 evaluates the communication path distortion by using a preamble signal in the reception signal and corrects the communication path distortion by using the evaluation result. The equalization unit 26 corrects the communication path and equalizes the attenuated reception signal but the noise component is also amplified here. Accordingly, the S/N ratio is not improved. However, if the equalization unit 26 is not used, an error is caused in the modulated data due to the affect by the communication path distortion. Such an error is detected by an error detection code such as a CRC (Cyclic Redundancy Check Code) and captured as a packet transmission error.

The demodulation unit 27 demodulates the base band carrier signal which has been modulated by the multi-carrier modulation method. In the case of a carrier modulated by the multi-carrier modulation method, data allocated for each carrier is extracted according to the information on the data allocation amount 28a of each carrier instructed by the control unit 28.

According to the data extracted by the demodulation unit 27, the control unit 28 performs conversion into a communication packet of the format used in the control device or the information control device and outputs communication packet to the protocol conversion unit 29. The protocol conversion unit 29 converts the data of the reception packet, for example, into a protocol such as USB and TCP/IS and passes data to/from the control device or the information processing device.

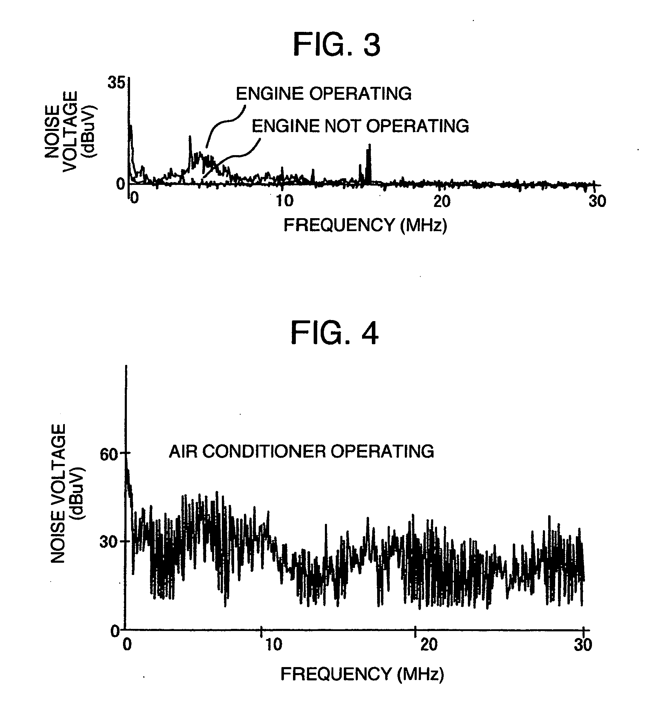

Next, explanation will be given on the frequency band used in the communication with reference to Fig. 3 to Fig. 5. Firstly, in a vehicle, recently, a television is used in addition to a radio. The radio provides AM broadcast and FM broadcast. Here, what is called AM broadcast generally is a middle-wave broadcast using a communication band from 530 kHz to 1.6 MHz and what is called FM broadcast generally is an ultrashort-wave broadcast using a communication band from 70 MHz to 108 MHz. The communication band of the VHF television is also an ultrashort-wave range. The ultrashort-wave is from 30 MHz to 300 MHz. It is necessary to prevent mixing of the radio broadcast with the television broadcast.

Moreover, when a band higher than 30 MHz is used, the signal attenuation by the battery line is increased and sufficient S/N ratio cannot be assured, which in turn lowers the data communication speed. For this, even if the modulation process by the OFDM is performed, only a small data amount can be allocated to a carrier higher than 30 MHz. Even if a complicated information process is executed, this hardly contributes to the communication speed. As a result, the cost required for creating hardware becomes higher and the device size becomes larger.

Moreover, when the communication path is like a coaxial cable and the interval between two conductor lines is sufficiently smaller than the wavelength of the communication signal, currents of opposing directions flow in the upper and the lower conductor line and the AC dipole electromagnetic field from the two conductor lines cancel each other. That is, the broadcast electromagnetic field is very weak and the affects to the AM radio, the FM radio, and the television in the vehicle are very low and can be ignored. However, when the communication path is formed by the battery line connected to the plus terminal of the battery and the vehicle chassis connected to minus terminal of the battery, the interval between them cannot be as small as several millimeters to 1 centimeter like the coaxial cable and it is impossible to suppress the radiation electromagnetic field to a low level. The level of the electromagnetic wave emitted from a communication path differential circuit (upper and lower conductor line) which can be ignored is considered to be a case when the interval "d" between the two conductor lines is 1/100 of the wavelength λ of the communication signal (d ≦ λ/100). Since the interval "d" between the battery line and the vehicle chassis can be evaluated to be in an order of 1 m at maximum, the λ is not smaller than 100 m, i.e., the frequency is not greater than 30 MHz.

Thus, when using the battery line and the vehicle chassis as the communication path, it is effective to perform communication in the frequency band from 2 MHz to 30 MHz by considering the communication performance and the reduction of affects to the AM radio, the FM radio, and the television in the vehicle.

Fig. 3 and Fig. 4 show measurement examples of the electric noise of the battery line installed in the vehicle. Fig. 3 shows a noise voltage with respect to the frequency when the engine is not operating and when the engine is operating. Fig. 4 shows a noise voltage with respect to the frequency when an air conditioner is operating.

As shown in Fig. 4, when the air conditioner is operating, the noise signal level is high. As for the noise superimposed on the battery line 1, the signal level becomes higher as the frequency becomes lower. Here, the signal level is a power expressed in the unit dB (decibel).

When a carrier signal is transmitted from a communication device to another communication device, even if the level of the transmission signal outputted from the communication device to the battery line 1 in a certain frequency band, the level of the reception signal received is lowered and fluctuates at the higher frequency side because of the frequency characteristic of the battery line 1. This signal attenuation is caused by the inductance of the battery line 1, an electrostatic capacitance between the going path and coming back path of the route of the battery line 1, and a signal reflection at a branching point and at a terminal including a connector of the battery line 1.

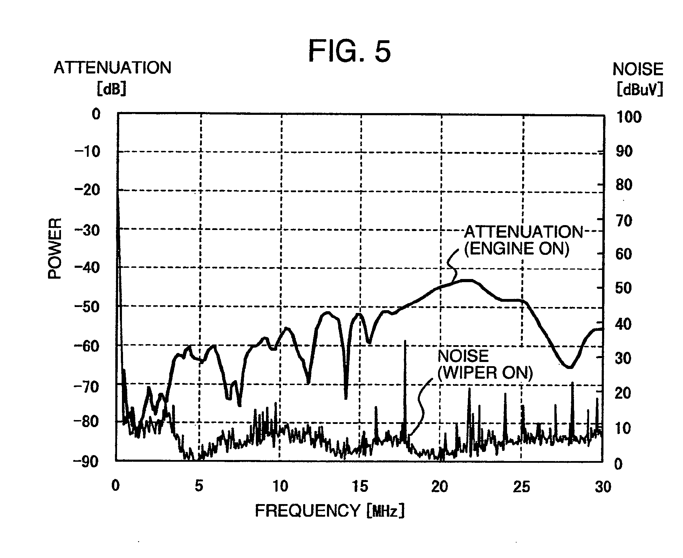

In order to perform stable data communication, it is necessary to increase the S/N ratio which is a ratio of the reception signal against the noise (difference when expressed in dB). When the S/N ratio of the reception signal in the high frequency band is evaluated in the vehicle communication environment, as shown in Fig. 5, the notch attenuation can be observed at 1-2 MHz, around 7 MHz, around 12 MHz, and around 14 MHz. Moreover, at a frequency higher than 15 MHz, the noise level of a particular frequency is high.

Since the notch attenuation is a signal attenuation caused in the vicinity of a particular frequency by a reflection at a branching point and a terminal point of the communication path, the frequency at which the notch attenuation is caused is almost decided when the communication path layout is decided, i.e., when the branch structure in the communication path and the arrangement positions of the communication devices 2a, 2b, 2c, ... are decided. The communication capacity of the control system is comparatively small and a 2 MHz band is considered to be sufficient.

In this embodiment, for example, if the S/N ratio of the frequency band 2 MHz to 12 MHz is compared to the S/N ratio of the a frequency band higher than this, the S/N ratio of the frequency band 12 MHz to 30 MHz is greater and appropriate for communicating large-amount data such as an image in the frequency band 10 MHz to 30 MHz. Accordingly, the control device is controlled in the frequency band 2 MHz to 12 MHz and the information process is performed in the frequency band 12 MHz to 30 MHz. Moreover, since the noise level of a particular frequency is high at a frequency higher than 15 MHz, a carrier of the particular frequency may be affected when the OFDM (Orthogonal Frequency Division Multiplexing) as one of the multicast modulation methods is employed but communication can be performed with a carrier of other frequencies.

In this embodiment, the frequency band 2 MHz to 4 MHz (hereinafter, referred to as band A) is assigned to throttle control, a frequency band 5 MHz to 7 MHz (hereinafter, referred to as band B) is assigned to electric brake control, a frequency band 8 MHz to 10 MHz (hereinafter, referred to as band C) is assigned to steering control, and a frequency band 12 MHz to 30 MHz (hereinafter, referred to as band D) is assigned to the back view monitor and other information processing systems. When there are a plurality of information processing systems, the band 12 MHz to 30 MHz may be divided into a plurality of bands. The bandwidth of the divided band is decided by considering the capacity required for respective communications.

Thus, the control system of a comparatively small communication capacity is divided into a plurality of frequency bands for communication and accordingly, it is possible to perform control with preferable control response. Moreover, since the frequency band 12 MHz to 30 MHz having a comparatively high S/N ratio is assigned to the information processing system requiring a large communication capacity, it is possible to perform a large-capacity communication such as image information. It should be noted that the information processing system not requiring a high-speed response may be communicated by time division.

Here, when the band A is made to be a base band, the band A is a frequency band of a carrier signal which is modulated and demodulated by the modulation unit 34 and the demodulation unit 27. The carriers of the band B and the band C are generated by frequency-converting, i.e., frequency-shifting the carrier signal of the base band by using the transmission carrier frequency conversion unit 31 which is a mixer circuit. Here, the frequency shift amount is decided by the frequency of the reference wave signal supplied from the reference wave signal generation unit 33. In this case, when frequency shift is performed to the band B, the frequency of the reference wave signal is 3 MHz and when frequency shift is performed to the band C, the frequency of the reference wave signal is 6 MHz. As for the band D, the base band is set to 12 to 30 MHz.

It should be noted that in the case of the band A which does not perform frequency shift, the reception carrier frequency conversion unit 23 and the transmission carrier frequency conversion unit 31 are set so that their frequency conversion function will not work.

Moreover, the frequency of the reference wave signal generated by the reference wave signal generation unit 33 is selected by a band selection signal 28c outputted from the control unit 28. In this embodiment, the reference wave signal generation unit 33 includes a generation circuit for generating a reference wave of 3 MHz and a generation circuit for generating a reference wave of 6 MHz. The band selection signal 28c selects which of the reference waves is to be outputted.

Moreover, the reception carrier frequency conversion unit 23 and the transmission carrier frequency conversion unit 31 select a pass band of the band pass filter 21 in accordance with the frequency band after the frequency conversion of the carrier signal. The same band selection signal 28c as the signal inputted to the reference wave signal generation unit 33 is used as the selection signal of the pass band.

In this embodiment, since each band is selected as has been described above, communication can be performed in a band avoiding a large notch attenuation in the vicinity of 1-2 MHz, 7 MHz, and 12 MHz. In the band of 15 MHz to 25 MHz, no notch attenuation exists and a high-quality communication, i.e., a high-speed communication can be performed.

Moreover, the frequency band where notch attenuation is caused depends on the communication path arrangement structure or the like and does not change frequently once the arrangement structure or the like is determined. For this, the control unit 28 can select a band by the band selection signal 28c in accordance with actual states of the noise and the notch attenuation and use a carrier of the selected communication band to perform communication by selecting a band having a small noise and a small notch attenuation, thereby realizing a high-speed and high-quality communication. Since an optimal state of the communication speed which can be realized is maintained in accordance with the actual states of the noise and the notch attenuation, the control unit 28 switches the frequency band to be used for communication while judging the quality of the communication path by measuring the S/N ratio of the reception signal and the reception data transmission error rate.

It should be noted that once the communication path arrangement structure is determined, the band selection signal 28c outputted from the control unit 28 may be fixed so as to use a frequency band where the noise and the notch attenuation are smallest if the noise and the notch attenuation do not change greatly.

In order to fix the band selection signal 28c, for example, an input switch is arranged as an auxiliary unit of the control unit 28 and the band selection signal 28c is set by the ON/OFF state of the input switch. By arranging the input switch, different frequency bands can be set in the same communication device, thereby providing an advantage to rationalize the design process, development, and manufacturing.

In this embodiment, since the noise level of a particular frequency higher than 15 MHz is high, explanation has been given on a case using the OFDM as the modulation/demodulation method. However, as the carrier modulation/demodulation method, it is also possible to use the ordinary multi-carrier modulation method, the multi-value modulation method allocating a plurality of waveforms having different amplitudes and phases to one carrier, or the multi-carrier multi-value modulation method combining the both methods.

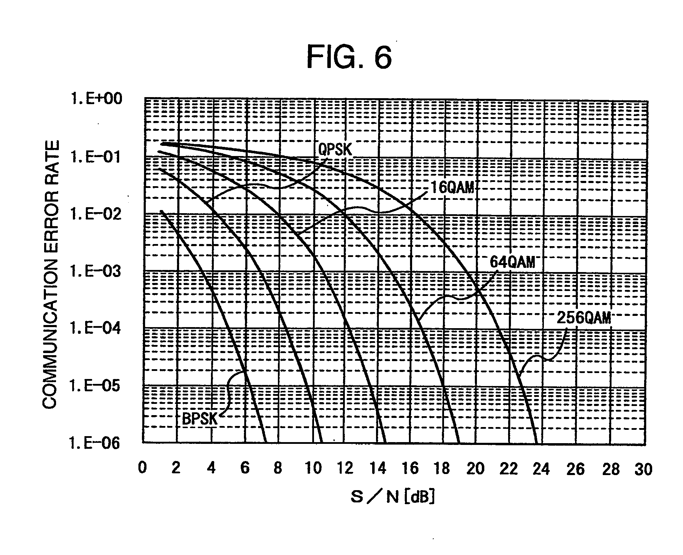

Fig. 6 shows the relationship between the S/N ratio and the communication error rate when the data allocation amount is made to be a parameter in the multi-value modulation method. In Fig. 6, BPSK stands for the binary phase shift keying method, QPSK stands for the quadrature phase shift keying method, and QAM stands for the quadrature amplitude modulation method. In the respective methods, the data allocation amount to the carrier is 1 bit (2-value) in the BPSK, 2 bits (4-value), 4 bits (16-value) in the 16 QAM, 6 bits (64-value) in the 64 QAM, and 8 bits (256-value) in the 256 QAM.

For example, when the transmission error rate is set to 10⁻⁵, the least S/N ratio required in the 256 QAM, 64 QAM, 16 QAM, QPSK, and BPSK are about 22.5 dB, about 17.7 dB, about 13.5 dB, about 9.5 dB, and about 6.3 dB, respectively. In the multi-value modulation method, the data amount allocated to the carrier can be changed in accordance with the S/N ratio of the communication path. When the data allocation amount is reduced, the communication speed is lowered. On the contrary, when the data allocation amount is increased, the communication speed is increased. Accordingly, it is possible to perform communication at a communication speed according to the S/N ratio of the communication path.

Moreover, by adding the error correction function, the transmission error rate can be reduced from 10⁻⁵ to the order of 10⁻⁷. In this case, if the communication speed is 1 Mbps, one error occurs once in 10 seconds if viewed from probability. However, by retransmitting the transmission frame or the packet where the error has occurred, stable communication can be obtained.

Moreover, in the multi-carrier multi-value modulation method, the carrier band is narrow as compared to the single-carrier multi-value modulation method. Accordingly, the S/N ratio in one carrier cannot be made large. However, even if the noise level in the vicinity of a particular frequency becomes large, only the data allocation amount to any one carrier is lowered and no affect to other carriers occurs. For this, in the multi-carrier modulation method, even if the noise level in the vicinity of a particular frequency has become large, it is possible to minimize the lowering of the communication speed as a whole.

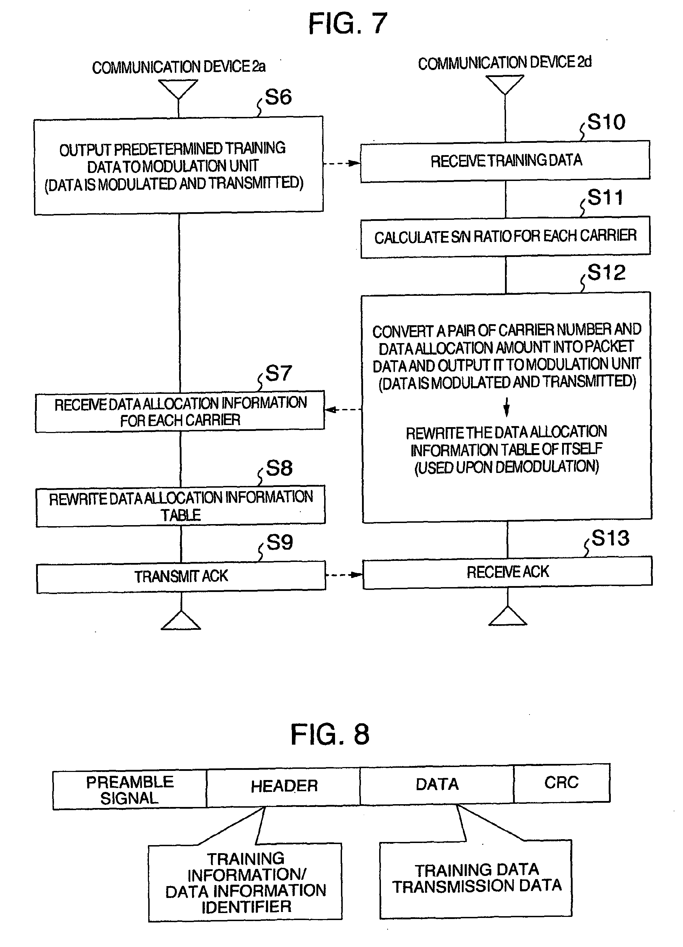

Fig. 7 is a flowchart for performing the process for evaluating the S/N ratio of the communication path (also called training process). In the training process, training data is communicated between the communication devices and an S/N ratio is calculated according to the received signal. According to the calculated S/N ratio, the data allocation amount to the carrier is decided.

As shown in Fig. 7, the training process is started at a set time interval during a data transmission or reception between communication devices such as an interrupt of a timer in the communication device 2a and the control unit 28 of the communication device 2a outputs the training data prepared in advance to the modulation unit 34. The training data is modulated to a carrier and transmitted to the communication device 2b (step S6).

The communication device 2d receives the training data (step S10) and calculates the S/N ratio for each of the carriers (step S11). A pair of a carrier number and a data allocation amount to be allocated to the carrier are converted into packet data and outputted to the modulation unit 34 (step S12). Here, the pair of the carrier number and the data allocation amount will be referred to as data allocation information.

In step S12, the communication device 2d rewrites a data allocation information table owned by the control unit 28 and updates the data allocation information owned by itself. The data allocation information is used when demodulating the carrier transmitted from the communication device 2a, by the communication device 2d.

On the other hand, the communication device 2a receives the data allocation information for each transmission wave transmitted from the communication device 2d (step S7) and rewrites the data allocation information table owned by the control unit 28 of the communication device 2a (step S8). The communication device 2a transmits an ACK (Acknowledge) message to the communication device 2d (step S9). Thus, completion of the rewrite of the data allocation information table is reported. The communication device 2d receives the ACK message (step S13), thereby completing the process.

When the training process of the communication device 2a is complete, the training data is transmitted from the communication device 2d to the communication device 2a and the S/N ratio from the communication device 2d to the communication device 2a is evaluated.

It should be noted that when the S/N ratio of the communication path is symmetric, the training process shown in Fig. 7 needs to be executed only once but when the S/N ratio is not symmetric, for example, when the noise source is at the communication device 2d and the noise of the communication device 2d is greater than the noise of the communication device 2a, the S/N ratio of the communication device 2d is smaller. When data is transmitted from the communication device 2a to the communication device 2d, it is necessary to reduce the data to be allocated for each carrier according to the S/N ratio. Thus, when there is a difference in the S/N ratio between the communication devices, the S/N ratio evaluation is performed in both directions and the obtained data allocation information is stored in the control unit 28 so as to be used upon modulation and demodulation.

Fig. 8 shows a transmission format of a packet used for communication between the communication devices according to the present embodiment. As shown in Fig. 8, the transmission format has a preamble signal, a header, data, and CRC. The header contains a training information/data information identifier indicating whether the transmitted data is training information or normal data information. When the identifier indicates training information, training data is contained in the data. When the identifier indicates data information, normal transmission data is contained in the data. The preamble is used for symbol synchronization and the CRC is used for checking a transmission data error.

Moreover, the header contains information for data information identification, i.e., ID information for identifying the communication device to which the data is to be transmitted. This ID information identifies, for example, to which of the electric brakes 63, 64, 65, 66 the data is to be transmitted.

As the training data, data such as 256 QMM, 64 QAM, and QPSK are used. However, for simplifying the explanation, an example of QPSK training data will be given below.

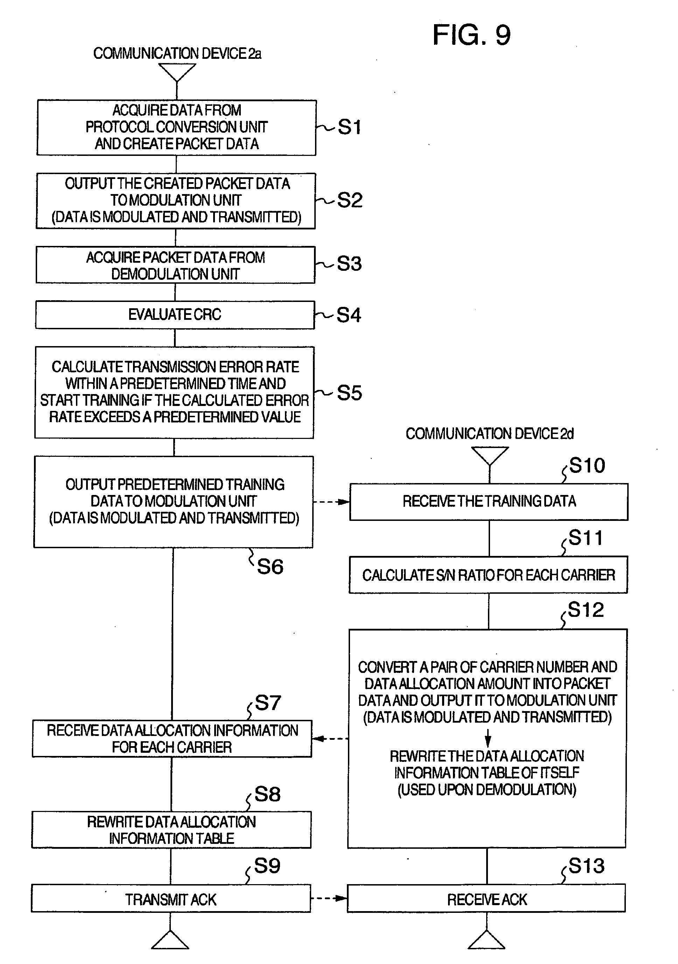

Fig. 9 is a flowchart showing the procedure of the training process which is started by an event. The training process shown in Fig. 7 is started by an interrupt at a predetermined time interval by a timer or the like. The training process shown in Fig. 9 is started when a transmission error occurrence frequency within a set time exceeds a threshold value while normal communication is performed.

In Fig. 9, step S1 to step S5 are processes performed in normal communication. Step S1 and step S2 are normal transmission processes. The control unit 28 of the communication device 2a acquires data to be transmitted from the protocol conversion unit 29, creates packet data (step S1), and outputs the created packet data to the modulation unit 34 (step S2). The packet data which has been modulated is subjected to the D/A conversion, the frequency conversion, and amplification, and transmitted via the communication path to the communication device 2d.

Step S3 to step S5 are normal reception processes. The carrier transmitted from the communication device 2d is amplified and subjected to the frequency conversion and the A/D conversion, and equalized before being inputted to the demodulation unit 27 where it is demodulated. The control unit 28 of the communication device 2a acquires the demodulated packet data from the demodulation unit 27 (step S3) and evaluates the CRC (Cycle Redundancy Code Check) attached to the packet data so as to detect a transmission error (step S4). Here, if a transmission error is detected, retransmission is requested to the communication device 2d. If no transmission error is detected, the acquired data is outputted to the protocol conversion unit 29.

In this embodiment, according to the CRC evaluation in step S4, i.e., according to the result of the error detection, the error occurrence frequency within a set time (transmission error rate) is calculated (step S5) and if the calculated error occurrence frequency (transmission error rate) exceeds a predetermined threshold value, the training process of the procedure shown in Fig. 7 is executed in step S6 to step S13.

When the training process is complete, the communication devices 2a and 2d perform normal data communication. In this case, the allocation of the data allocation amount for the carrier is performed according to the updated one.

It should be noted that explanation has been given on the procedure of the training process when data is transmitted from the communication device 2d to the communication device 2a but the training process when the data is transmitted from the communication device 2a to the communication device 2d is also performed by the same procedure.

The training process started by the event that the transmission error rate is lowered is performed when the S/N ratio is degraded. Accordingly, as compared to the method evaluating the S/N ratio at every set time interval, the interrupt frequency is reduced, which provides an advantage that the efficiency of the communication data transmission is hardly lowered.

Moreover, it is also possible to employ both of the training process started by an event and the training process started at a set time interval. In the training process started by an event, the data allocation amount for the carrier can be updated when the S/N ratio is degraded but even if the S/N ratio is improved, it is impossible to return the state to the previous one by increasing the data allocation amount. To cope with this, if no start is caused by an event even if the set time has elapsed, the training process can be performed by a timer interrupt so that the data allocation amount for the carrier whose S/N ratio is improved is updated to a greater value. For this, when the S/N ratio is improved, it is possible to update the communication to a higher speed, thereby improving the transmission efficiency as a whole.

Thus, the communication characteristic (such as a transmission error and the S/N ratio) of the communication path between the communication devices 2a, 2b, 2c is dynamically evaluated. The control unit 28 outputs information on the data allocation amounts 28a, 28b to the demodulation unit 27 and the modulation unit 34 and executes the modulation and demodulation processes (data allocation amount modification), thereby realizing a higher-speed and higher-quality communication with less transmission errors.

In the in-vehicle communication control device having such a configuration, explanation will be given on a case that the steering wheel 52 is operated to get away from an obstacle, the throttle pedal 50 is released, and the brake pedal 51 is stepped-in.

The operation amount of the steering wheel 52 is detected by the steering angle sensor, inputted to the controller 55, and transmitted as a carrier of the frequency band of the band C via the communication device 2c to the battery line 1. The step-in amount of the throttle pedal is detected by the accelerator position sensor, inputted to the controller 53, and transmitted as a carrier of the frequency band of the band A via the communication device 2a to the battery line 1. The step-in amount of the brake pedal 51 is detected by a sensor, inputted to the controller 54, and transmitted as a carrier of the frequency band of band B via the communication device 2b to the battery line 1. An image captured by the back view monitor camera 56 is continuously inputted to the controller 57 and transmitted as a carrier of the frequency band of band D via the communication device 2k to the battery line 1. Here, ID information for identifying the electric brake to be controlled is attached to the header of the packet data transmitted from the communication device 2b.

The carrier of band C transmitted from the communication device 2c is received by the communication device 2e having the band pass filter 21 of the same frequency band and inputted to the controller 58. In the controller 58, the signal of the speed sensor is fed back and the steering control signal based on the vehicle speed is outputted to the steering device 69. Thus, the operation of the steering wheel 52 is not transmitted via the mechanical steering transmission mechanism but the steering device 69 is controlled by communication via the battery line 1, the communication devices 2c, 2e. Accordingly, there is no need of providing a mechanical steering transmission mechanism, which in turn assures a sufficient space and increases the degree of freedom of arrangement of the steering device. Moreover, the control response is improved.

The carrier of band A transmitted from the communication device 2a is received by the communication device 2d having the band pass filter 21 of the same frequency band and the control signal and accelerator position sensor detection value are inputted to the ECU 68 so as to control the engine.

The carrier of band B transmitted from the communication device 2b is received by the communication devices 2f, 2g, 2h, 2i having the band pass filter 21 of the same frequency band. As has been described above, since the header of the packet data transmitted from the communication device 2b has ID information for identifying the electric brake to be controlled, the controllers 59, 60, 61, 62 make judgment to perform control of the corresponding electric brakes by using the data received by the communication devices 2f, 2g, 2h, 2i. Thus, since control can be performed by communication through the battery line having a large diameter up to the portion where the electric brake having a large vibration is installed, breakage hardly occurs.

Thus, control signals or detection values of the steering wheel operation, the accelerator operation, and the brake operation are simultaneously transmitted by power line carriers for each of the frequency bands A, B, C and accordingly, it is possible to perform a control of preferable response. Moreover, the configuration of the devices to be installed in the vehicle is simplified and the space inside the vehicle can be increased with a reduced number of cables to be installed. This reduces the weight of the entire vehicle and improves mileage.

The carrier of band D transmitted from the communication device 2k is received by the communication device 2j having the band pass filter 21 of the same frequency band and displays an image at the rear of the vehicle by operation of the car navigation device 67.

Between the communication devices which transmit and receive data such as the communication device 2a and the communication device 2d, as has been described above, the training process is performed mutually, the S/N ratio is evaluated in the both directions, and the obtained data allocation information is used to perform data allocation for the carrier. This enables a high-quality communication with less transmission errors.

### Industrial Applicability

The battery line is used to control the accelerator, the brake, and the steering wheel at the frequency bands obtained by dividing the frequency band 2 to 10 MHz with power line carrying for communication. The information processing system such as the back view monitor is communicated at the frequency band of 12 to 30 MHz with power line carrying. Accordingly, it is possible to perform control with a preferable control response without requiring installation of a special communication cable at the rear of the vehicle. Thus, it is possible to provide a vehicle and an in-vehicle communication control device which can be easily mounted with a communication cable of small weight.

## Claims

1. A vehicle comprising:
a plurality of operation devices installed in the vehicle;
sensors arranged in the respective operation devices for detecting operation amounts of the operation devices;
controllers connected to the respective sensors and inputting the operation amounts detected by the sensors;
a communication device connected to the controllers and a battery line and outputting a control signal as a carrier of a different frequency band for each type of the operation devices to the battery line;
a second communication device connected to the battery line and using a carrier of a frequency band of each of the operation devices as a pass band; and
a second controller connected to the second communication device and controlling the control device corresponding to the operation device.

2. A vehicle comprising:
a plurality of operation devices including a brake pedal installed in the vehicle;
sensors for detecting operation amounts of the operation devices including a sensor detecting a step-in amount of the brake pedal;
a controller connected to each of the sensors and inputting the operation amounts detected by the sensors;
a communication device connected to the controller and a battery line and outputting a control signal as a carrier of a different frequency band for each type of the operation devices to the battery line;
a second communication device connected to the battery line and installed in a front wheel section and a rear wheel section of the vehicle, and using a carrier of a frequency band allocated to the brake pedal as a pass band; and
a controller connected via the second communication device and controlling the respective brake devices of the front wheels and the rear wheels.

3. A vehicle comprising:
a back view monitor camera installed at a rear portion of the vehicle;
a controller connected to the back view monitor camera, inputting an image captured by the back view monitor camera, and image-processing the image;
a communication device connected to the controller and outputting a carrier to a battery line;
a second communication device connected to the battery line and using a frequency band of the carrier outputted by the communication device as a pass band; and
a display device installed in the vehicle connected to the second communication device.

4. The vehicle as claimed in claim 1, wherein
one of the operation devices is a steering wheel,
the second communication device corresponding to the steering wheel is connected to the battery line installed in an engine room, and
the second controller controls a steering device.

5. The vehicle as claimed in one of claims 1 to 3, wherein
training data is communicated between the communication device and the second communication device using a corresponding frequency band as a pass band,
an S/N ratio is calculated according to a received signal, and
an amount of data to be allocated to the carrier is decided according to the calculated S/N ratio.

6. The vehicle as claimed in one of claims 1 and 2, further comprising:
a controller for inputting an image captured by the back view monitor camera installed at a rear portion of the vehicle and image-processing the image;
a third communication device connected to the controller and outputting a carrier of a frequency band different from the frequency band used in the control system to the battery line;
a fourth communication device connected to the battery line and using a frequency band of the carrier outputted by the communication device as a pass band; and
a display device installed in the vehicle connected to the fourth communication device.

7. An in-vehicle communication control device comprising:
controllers arranged in a plurality of operation devices installed in the vehicle and inputting operation amounts detected by respective sensors detecting operation amounts of the operation devices;
a communication device connected to the controllers and a battery line and outputting a control signal as a carrier of a frequency band different for each type of the operation devices to the battery line;
a second communication device connected to the battery line and using a carrier of a frequency band for each of the operation devices as a pass band; and
a second controller connected to the second communication device and controlling the control devices corresponding to the operation devices.

8. An in-vehicle communication control device comprising:
a controller for inputting an image captured by a back view monitor camera installed at a rear portion of the vehicle and image-processing the image;
a communication device connected to the controller and outputting as a carrier of a frequency band different from a communication frequency band to the battery line; and
a second communication device connected to a display device installed in the vehicle, connected to the battery line, and using a frequency band of the carrier outputted by the communication device as a pass band.

9. The in-vehicle communication control device as claimed in claim 7, wherein
the frequency band different for each type of the operation devices is a frequency band obtained by dividing the frequency band of 2 to 10 MHz.

10. The in-vehicle communication control device as claimed in claim 7, wherein the frequency band of the carrier is in a range from 12 to 30 MHz.

11. An in-vehicle communication device for use in a vehicle in which a plus terminal of a battery is connected to a battery line while a minus terminal of the battery is connected to a vehicle chassis, so that a communication signal of a carrier is transmitted and received by using the battery line and the vehicle chassis as a communication path, wherein
the communication signal of the communication device has a frequency band of a range not smaller than 2 MHz and not greater than 30 MHz.

12. An in-vehicle communication device comprising a plurality of communication devices for use in a vehicle in which a plus terminal of a battery is connected to a battery line while a minus terminal of the battery is connected to a vehicle chassis, so that a communication signal of a carrier is transmitted and received by using the battery line and the vehicle chassis as a communication path, wherein
the communication devices communicate with one another by using frequency bands obtained by dividing the frequency band of a range not smaller than 2 MHz and not greater than 30 MHz.

13. The in-vehicle communication control device as claimed in claim 7, wherein
one of the operation devices is a brake pedal and
the second communication device is arranged at each of a front wheel section and a rear wheel section and uses the carrier of the frequency band allocated for the brake pedal as a pass band.

14. The in-vehicle communication control device as claimed in claim 7, wherein
one of the operation devices is a steering wheel and
the second communication device corresponding to the steering wheel is connected to a battery line arranged in an engine room.
